# FASCICULE DE BREVET EUROPEEN

(11) **EP 1 893 450 B1**
(45) Date de publication et mention de la délivrance du brevet: **04.07.2012**
(21) Numéro de dépôt: 06778615.2
(22) Date de dépôt: 19.06.2006
(51) Int. Cl.: B60R 19/34, B60R 19/03, B60R 19/22

(54) **DISPOSITIF ABSORBEUR D'ENERGIE POUR POUTRE PARE-CHOCS DE VEHICULE AUTOMOBILE ET FACE AVANT COMPORTANT UN TEL DISPOSITIF**
ENERGIEABSORBIERENDE VORRICHTUNG FÜR EINE STOSSSTANGE FÜR EIN KRAFTFAHRZEUG UND DAMIT AUSGESTATTETE FAHRZEUGVORDERFLÄCHE
ENERGY ABSORBING DEVICE FOR A BUMPER BEAM FOR A MOTOR VEHICLE AND A FRONT FACE PROVIDED THEREWITH

(30) Priorité: 20.06.2005 FR 0506249
(43) Date de publication de la demande: 05.03.2008
(73) Titulaire: VALEO SYSTEMES THERMIQUES, 78321 Le Mesnil St Denis Cedex (FR)
(72) Inventeur: GUINEHUT, Sébastien, F-92130 Issy-Les-Moulineaux (FR); LAJAUNIE, Emmanuel, F-78220 Viroflay (FR); FONSECA BARBOSA, Marcelo, F-78280 Gyancourt (FR)
(86) Numéro de dépôt international: PCT/FR2006/001380
(87) Numéro de publication internationale: WO 2006/136688

(56) Documents cités:
- FR-A- 2 842 152
- US-A- 2 997 325
- US-A- 4 262 778
- US-B1- 6 702 345

## Description

L'invention se rapporte à un dispositif absorbeur d'énergie propre à assurer une protection en cas de choc frontal d'un véhicule automobile et à une face avant comportant un tel dispositif.

Elle concerne plus particulièrement un dispositif absorbeur d'énergie pour poutre pare-chocs de véhicule automobile, du type comprenant un boîtier absorbeur d'énergie destiné à être placé entre la poutre pare-chocs et l'extrémité d'un longeron de véhicule en regard de la poutre pare-chocs.

Dans les dispositifs connus de ce genre, le boîtier absorbeur d'énergie présente une forme allongée suivant la direction longitudinale du véhicule. Une première extrémité du boîtier est rattachée à la poutre pare-chocs et une deuxième extrémité est munie d'une platine support propre à être fixée à l'extrémité d'un longeron de véhicule.

Le boîtier absorbeur d'énergie est, par exemple, composé d'une enveloppe métallique en forme de parallélépipède rectangle renfermant une matière absorbante d'énergie, comme par exemple une mousse d'aluminium. L'enveloppe est alors fermée par une plaque métallique, qui constitue la platine support, contre laquelle la matière absorbante d'énergie est comprimée lors d'un choc frontal du véhicule.

Il est connu des véhicules comprenant deux boîtiers absorbeurs d'énergie fixés respectivement sur deux longerons et servant à la fixation de la poutre pare-chocs, cette dernière servant à son tour au montage du pare-chocs proprement dit, encore appelé bouclier.

De tels boîtiers absorbeurs d'énergie doivent répondre à des normes strictes afin d'être capables d'absorber l'énergie d'un choc normalisé, connu sous le nom de choc Danner, correspondant à l'impact du véhicule contre un obstacle fixe à une vitesse de 16 km/h. L'absorption de l'énergie doit être obtenue sans que le pic d'effort enregistré dans le boîtier ne dépasse une limite maximale, par exemple 120 kN.

Le test Danner permet d'évaluer les ratios d'énergie absorbée rapportée à la masse de l'absorbeur d'énergie (ratio d'énergie par masse) et l'énergie absorbée rapportée à l'intrusion de l'objet qui percute le véhicule ou contre lequel le véhicule percute (ratio d'énergie par intrusion). La maximalisation de ces ratios permet de réduire les dégâts occasionnés dans une face avant de véhicule lors d'un choc frontal et par suite le coût des réparations et de la prime d'assurance qui est calculée à partir du coût de ces réparations.

US 4262778 A décrit un dispositif absorbeur d'énergie selon le préambule de la revendication 1.

Il est donc important, afin d'augmenter la sécurité et de limiter le montant de la prime d'assurance pour un véhicule donné, que ce dernier soit capable de subir un tel choc frontal sans subir de dommages importants.

Un but de l'invention est de réaliser un dispositif absorbeur d'énergie qui présente une capacité d'absorption élevée.

Un autre but de l'invention est de réaliser un tel dispositif absorbeur d'énergie qui résiste correctement aux efforts de flambement engendrés lors des chocs Danner en réduisant le porte-à-faux avant du boîtier absorbeur.

Encore un autre but de l'invention est de limiter le déversement du boîtier absorbeur et d'augmenter sa capacité d'absorption d'énergie.

Selon une première caractéristique de l'invention, afin d'augmenter l'efficacité du dispositif boîtier absorbeur d'énergie, celui-ci est aménagé pour permettre l'évacuation de la matière absorbante d'énergie à l'extérieur du boîtier absorbeur d'énergie, dans au moins une direction d'évacuation donnée, lorsqu'une pression exercée sur le dispositif absorbeur d'énergie par le longeron et la poutre pare-chocs dépasse une valeur de seuil déterminée.

On réalise ainsi un boîtier permettant, en cas de choc frontal, d'évacuer la matière absorbante d'énergie qu'il contenait initialement. Cela permet d'assurer une absorption progressive de l'énergie d'impact du choc et de limiter le volume résiduel de la matière absorbante d'énergie du fait que cette dernière peut s'évacuer complètement à l'extérieur du boîtier, ce qui n'est pas possible avec les dispositifs existants. L'évacuation de la matière absorbante d'énergie s'effectue ainsi de manière contrôlée.

Dans un mode de réalisation de l'invention, la valeur de seuil précitée correspond à un effort de flambement du longeron.

Dans une première forme de réalisation, le boîtier présente une platine propre à être fixée à l'extrémité d'un longeron de véhicule et la platine du boîtier absorbeur d'énergie est aménagée pour permettre à la matière absorbante d'énergie de traverser ladite platine et d'être évacuée à l'intérieur de l'extrémité du longeron, qui est réalisée creuse. Ainsi l'évacuation de la matière absorbante s'effectue dans la direction du longeron, donc dans la direction longitudinale du véhicule.

Plus précisément, la platine du boîtier absorbeur d'énergie a des formes et des dimensions déterminées pour permettre audit boîtier absorbeur d'énergie d'être maintenu à l'extrémité du longeron tant que la pression exercée sur le dispositif absorbeur d'énergie par le longeron et la poutre pare-chocs est inférieure à la valeur de seuil déterminée et permettre à la matière absorbante d'énergie de pénétrer à l'intérieur du longeron lorsque la pression exercée sur le dispositif absorbeur d'énergie par le longeron et la poutre pare-chocs dépasse la valeur de seuil déterminée.

Dans un premier mode de réalisation avantageux, la platine du boîtier absorbeur d'énergie est traversée par un trou de section déterminée pour permettre à la matière absorbante d'énergie remplissant le boîtier absorbeur d'énergie de pénétrer dans le longeron lorsque la pression exercée sur le dispositif absorbeur d'énergie par le longeron et la poutre pare-chocs dépasse la valeur de seuil déterminée.

Suivant un deuxième mode de réalisation, la platine ferme une extrémité du boîtier absorbeur d'énergie et présente une ligne de rupture programmée en regard avec le pourtour intérieur de la section transversale du boîtier absorbeur d'énergie pour permettre à la matière absorbante d'énergie de pénétrer dans le longeron en arrachant la portion de platine délimitée par la ligne de rupture en regard avec le pourtour du boîtier absorbeur d'énergie, lorsque la pression exercée sur le dispositif absorbeur d'énergie par le longeron et la poutre pare-chocs dépasse la valeur de seuil déterminée.

Dans une première variante de réalisation du mode précédent, la ligne de rupture de la platine est ajourée par tronçons.

Dans une deuxième variante de réalisation, la platine présente une épaisseur réduite par tronçons le long de la ligne de rupture.

Dans une troisième variante de réalisation, la platine présente une épaisseur réduite tout le long de la ligne de rupture.

Enfin selon une quatrième variante de réalisation, la platine présente une épaisseur réduite à l'intérieur de la ligne de rupture.

De cette façon, le volume résiduel du boîtier absorbeur d'énergie correspondant à la densification critique de la matière absorbante d'énergie remplissant le boîtier se trouve évacuée à l'intérieur de l'extrémité du longeron lorsque l'effort exercé sur le boîtier dépasse la valeur de seuil déterminée. Grâce à ce processus l'effort exercé sur le boîtier chute au lieu de continuer sa progression, ce qui permet au dispositif absorbeur d'énergie de continuer d'absorber de l'énergie sous un effort acceptable. Ceci permet également, à caractéristiques de boîtiers absorbeurs d'énergie égales, de réduire le porte-à-faux ainsi que l'encombrement de l'ensemble du dispositif absorbeur d'énergie.

Selon une deuxième forme de réalisation avantageuse, le boîtier absorbeur d'énergie comporte des ouvertures pour permettre à la matière absorbante d'énergie d'être évacuée dans une direction transversale à la direction de l'axe longitudinal du longeron lorsque la pression exercée sur le dispositif absorbeur d'énergie par le longeron et la poutre pare-chocs dépasse une valeur de seuil déterminée.

Autrement dit, la matière absorbante du boîtier absorbeur d'énergie est évacuée, dans ce cas, dans une direction transversale à la direction du choc.

Dans ce mode de réalisation, le boîtier absorbeur d'énergie A, par exemple, la forme d'un parallélépipède composé de quatre parois latérales comprises entre deux parois de fond disposées suivant une direction perpendiculaire à l'axe longitudinal du boîtier, et le boîtier comporte un nombre déterminé de cloisons disposées parallèlement entre deux parois latérales opposées parallèles à l'axe longitudinal du longeron, pour former des alvéoles remplis par de la matière absorbante d'énergie, délimités entre les cloisons et les parois latérales, les alvéoles étant fermés à une extrémité par une paroi de fond et ouverts à l'autre extrémité dans la paroi de fond opposée, pour permettre à la matière absorbante d'énergie enfermée dans chaque alvéole d'être évacuée transversalement, relativement à l'axe longitudinal du longeron, lorsque la pression exercée sur le dispositif absorbeur d'énergie par le longeron et la poutre pare-chocs dépasse une valeur de seuil déterminée.

Les alvéoles peuvent être ouverts sur une même paroi de fond du boîtier absorbeur d'énergie, ou bien être alternativement ouverts sur deux parois de fond opposées du boîtier absorbeur d'énergie.

Le boîtier absorbeur d'énergie est réalisé par extrusion dans un profilé en forme de parallélépipède, compartimenté par des cloisons disposées parallèlement entre deux parois parallèles opposées du profilé.

Dans une variante de réalisation, la matière absorbante d'énergie est une mousse. Ainsi, le boîtier absorbeur d'énergie peut renfermer une mousse absorbante en aluminium ou une mousse absorbante en matière plastique.

L'invention concerne aussi une face avant comportant un dispositif tel que décrit précédemment.

D'autres caractéristiques et avantages de l'invention apparaîtront encore à la lecture de la description qui suit d'exemples de réalisations données à titre d'illustration en référence aux figures annexées. Sur ces figures:
La Figure 1 est une vue d'ensemble d'une poutre pare-chocs et d'un boîtier absorbeur d'énergie monté sur une face avant de véhicule automobile;
La Figure 2 est une courbe représentative des efforts encaissés par un boîtier absorbeur d'énergie lors d'un choc;
Les Figures 3A, 3B d'une part et 4A, 4B d'autre part, sont deux schémas représentant deux situations comparées avant et après choc frontal d'un boîtier absorbeur d'énergie monté à l'extrémité d'un longeron suivant les modes de réalisation de l'art antérieur; et suivant les modes de réalisation de l'invention;
Les Figures 5, 6, 7, 8 illustrent des modes de réalisation différents de la platine de fixation du boîtier absorbeur d'énergie selon l'invention;
La Figure 9 est une courbe représentative des efforts encaissés par un boîtier absorbeur d'énergie comportant une platine de forme évidée, lors d'un choc;
La Figure 10 est une courbe représentative des efforts encaissés par un boîtier absorbeur d'énergie comportant une platine de forme amincie, lors d'un choc;
La Figure 11 est une courbe représentative des efforts encaissés par un boîtier absorbeur d'énergie comportant une platine à rupture programmée, lors d'un choc;
La Figure 12 illustre un mode de réalisation d'un boîtier absorbeur d'énergie dans un profilé permettant la disposition de la matière absorbante d'énergie en plusieurs couches; et
Les Figures 13 et 14 illustrent deux modes d'évacuation transversaux de la matière absorbante d'énergie d'un boîtier absorbeur d'énergie réalisée en plusieurs couches superposées.

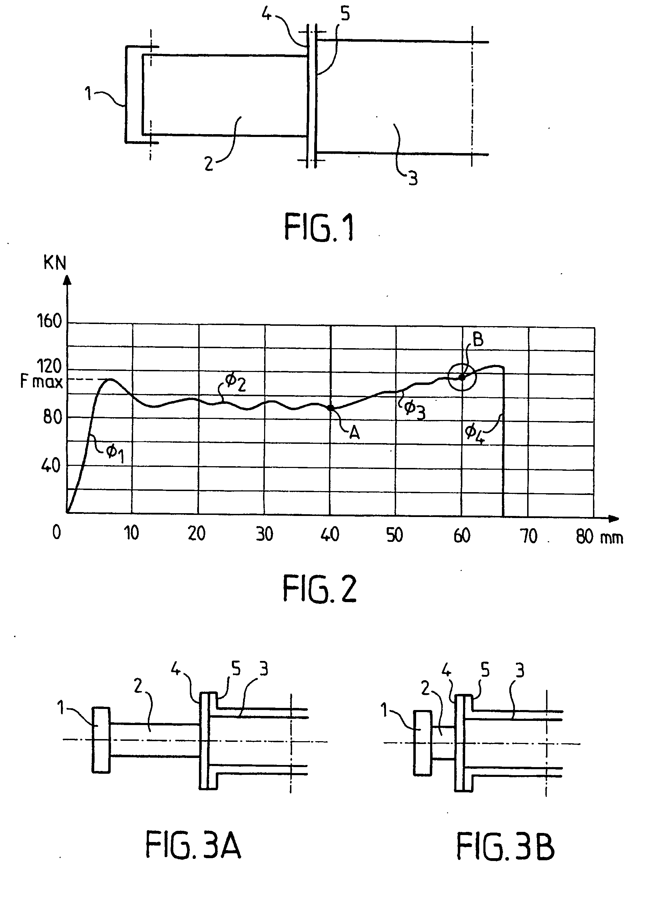

On a représenté schématiquement sur la Figure 1 une poutre pare-chocs 1 propre à être montée à l'avant d'un véhicule automobile. La poutre pare-chocs 1 est constituée par un profil creux, par exemple de section ouverte (C ou U) ou bien de section fermée, dans lequel vient se loger au moins en partie un boîtier absorbeur d'énergie 2. Classiquement le boîtier absorbeur d'énergie 2 est réalisé dans un tronçon de profilé métallique de section rectangulaire obtenu par extrusion. Il est fermé à une extrémité par une plaque métallique 4 faisant office de platine de fixation du boîtier absorbeur d'énergie 2 sur une extrémité 5, en forme de platine, d'un longeron 3 de véhicule.

On a représenté sur la Figure 2 une courbe représentative des efforts encaissés par le boîtier absorbeur d'énergie 2 lors d'un choc frontal. L'axe des ordonnées est gradué en kN. Le raccourcissement longitudinal du boîtier 2 sous l'action de la force appliquée sur le boîtier absorbeur d'énergie 2 lors d'un test Danner est porté sur l'axe des abscisses en mm. Ce raccourcissement correspond ici à l'écrasement du profilé du boîtier absorbeur.

La courbe comporte quatre phases notées respectivement 01, 02, 03 et 04. Les trois premières phases correspondent à l'absorption d'énergie par déformation du boîtier absorbeur d'énergie 2. Durant la première phase ø1, le boîtier absorbeur d'énergie 2 subit une déformation élastoplastique linéaire jusqu'à une valeur de force Fmax inférieure à la force encaissable par le longeron qui est, par exemple, de 120 KN dans le test Danner.

Durant la deuxième phase ø2 le boîtier absorbeur d'énergie 2 subit une déformation de type plastique durant laquelle l'effort encaissé est à peu près constant et oscille autour d'une valeur moyenne d'environ 95 KN jusqu'à un point noté A à partir duquel commence une phase de densification ø3 de la mousse d'aluminium.

Ainsi, le boîtier absorbeur d'énergie est apte à se déformer pour absorber de l'énergie produite lors du choc.

Durant la troisième phase ø3 qui suit, le boîtier absorbeur d'énergie 2 n'absorbe pas d'énergie, sous un effort acceptable, jusqu'à un seuil de densification critique marqué par le point B qui correspond à un effort à ne pas dépasser et qui correspondant à l'effort de flambement du longeron (phase ø4). Ceci vient du fait que le volume restant est quasiment incompressible sous un effort relativement faible. Ce volume est appelé ci-après le volume résiduel. Le volume résiduel est un critère qui permet d'évaluer l'efficacité du boîtier absorbeur d'énergie. Cette efficacité est naturellement d'autant plus grande que la longueur du volume résiduel est minimum. L'idéal serait de réaliser un boîtier absorbeur d'énergie qui soit capable d'absorber l'énergie sur 100% de sa longueur initiale.

On a représenté sur les Figures 3A et 3B le comportement d'un boîtier absorbeur d'énergie 2 dans le mode classique d'assemblage de la Figure 1 où les éléments homologues à ceux de la Figure 1 portent les mêmes références. Cet exemple fait apparaître que, sous l'action d'un choc frontal du véhicule, le boîtier absorbeur d'énergie 2 se déforme et que sa longueur diminue jusqu'à une longueur déterminée correspondant à un volume résiduel du boîtier 2, Figure 3B, au delà de laquelle elle ne diminue pratiquement plus.

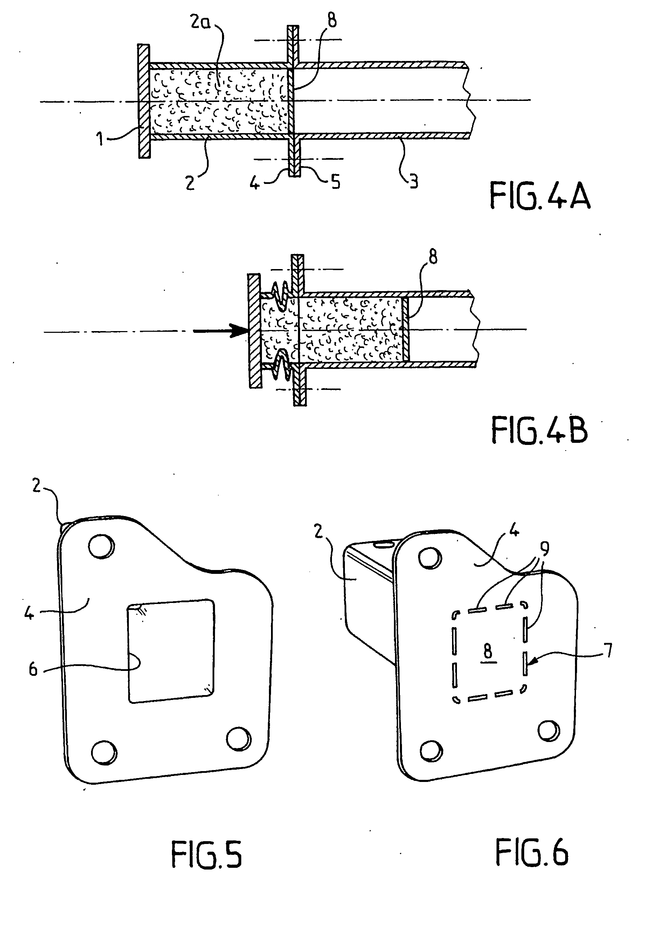

Selon un premier mode de mise en oeuvre de l'invention, représenté aux Figures 4A et 4B, qui permet d'augmenter l'efficacité du boîtier absorbeur d'énergie 2, celui-ci est rempli d'une matière absorbante d'énergie 2a et comporte une platine 4 pour fixation sur l'extrémité 5, également en forme de platine, du longeron 3. Le boîtier absorbeur d'énergie est apte à se déformer pour absorber de l'énergie produite lors du choc.

Selon l'invention, on donne à la platine 4 du boîtier absorbeur d'énergie 2 une forme adaptée qui permet d'évacuer la masse de matière absorbante d'énergie 2a à l'intérieur du longeron 3 lorsque, la pression exercée sur le dispositif absorbeur d'énergie par le longeron et la poutre pare-chocs dépasse une valeur de seuil déterminée.

La valeur de seuil correspond ici à l'effort de flambement du longeron 3.

Plus précisément, la forme de la platine 4 et du boîtier absorbeur d'énergie 2 sont déterminées pour permettre au boîtier absorbeur d'énergie 2 d'être maintenu à l'extrémité du longeron 3 tant que la pression exercée sur le boîtier absorbeur d'énergie 2 par le longeron 3 et la poutre pare-chocs 1 est inférieure à la valeur de seuil déterminée. Dans cette phase, qui est représentée à la Figure 4A, la longueur du boîtier absorbeur d'énergie 2 est progressivement diminuée jusqu'à atteindre celle du volume résiduel (Figure 4B). Ce volume résiduel correspond à l'écrasement du boîtier proprement dit, c'est-à-dire de l'enveloppe dont il est formé.

Lorsque la pression exercée sur le dispositif absorbeur d'énergie par le longeron 3 et la poutre pare-chocs 1 dépasse la valeur de seuil déterminée les formes adaptées du boîtier absorbeur d'énergie 2 et de la platine 4 permettent à la matière absorbante d'énergie 2a de pénétrer à l'intérieur du longeron 3, ce qui augmente l'efficacité de l'ensemble contre les chocs. Pour cela, il est nécessaire que la platine puisse laisser passer la matière absorbante 2a, par exemple au travers d'une partie 8 à rupture programmée ou contrôlée de la platine, et que l'extrémité 5 du boîtier soit réalisée creuse.

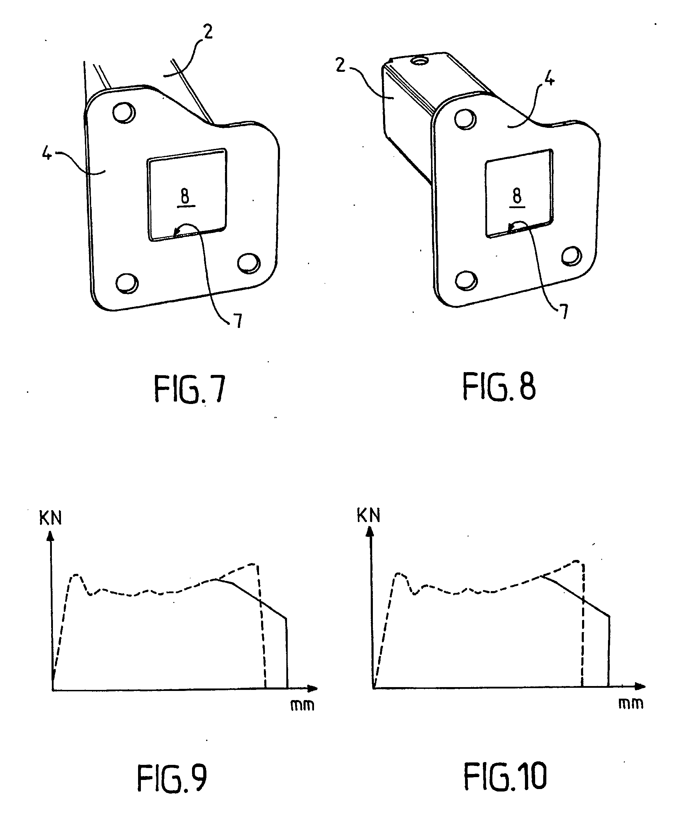

Dans un premier mode de réalisation représenté à la Figure 5, la platine 4 du boîtier absorbeur d'énergie 2 est traversée par un trou rectangulaire 6 de section déterminée, inférieure à la section transversale du boîtier absorbeur d'énergie 2, pour permettre à la matière absorbante 2a remplissant le boîtier absorbeur d'énergie 2 de pénétrer dans le longeron 3 au travers du trou 6 de la platine 4 lorsque la pression exercée sur le dispositif absorbeur d'énergie par le longeron 3 et la poutre pare-chocs 1 dépasse la valeur de seuil déterminée. Dans cet exemple, l'effort exercé sur le boîtier chute en même temps que la matière pénètre à l'intérieur du longeron comme le montre le graphe de la Figure 9.

Suivant le mode de réalisation de la Figure 6., la platine 4 à l'extrémité du boîtier 2 présente une ligne de rupture rectangulaire 7 programmée, disposée sensiblement en regard avec les bords d'extrémité du boîtier 2 pour permettre à la matière absorbante 2a de pénétrer dans le longeron 3, en arrachant la partie de platine 8 délimitée par la ligne de rupture 7 en regard avec le pourtour du boîtier 2, lorsque la pression exercée sur le dispositif absorbeur d'énergie par le longeron 3 et la poutre pare-chocs 1 dépasse la valeur de seuil déterminée. Dans cet exemple, lorsque la matière absorbante s'évacue au travers de l'évidement formé par la partie arrachée 8 de la platine 4, l'effort exercé sur le boîtier 2 chute comme le montre le graphe de la Figure 10.

Dans une première variante de réalisation du mode précédent, représentée Figure 6, la platine 4 est ajourée par tronçons 9 le long de la ligne de rupture 7 en regard avec le bord d'extrémité du boîtier 2.

Dans une deuxième variante de réalisation du mode représenté à la Figure 6, la platine 4 présente une épaisseur réduite par tronçons 9 le long d'une ligne de rupture 7 en regard avec le bord d'extrémité du boîtier 2.

Dans une troisième variante de réalisation représentée Figure 7, la platine 4 présente une épaisseur réduite tout le long de la ligne de rupture 7 en regard avec le bord d'extrémité intérieur du boîtier 2.

Dans les exemples précédents des Figures 6 et 7, l'effort exercé sur le boîtier absorbeur d'énergie 2 chute comme le montre le graphe de la Figure 10 lors de la rupture de la partie 8 de la platine dont la ligne de rupture 7 est programmée par des amorces assurant une ruine locale de la platine au moment de la densification.

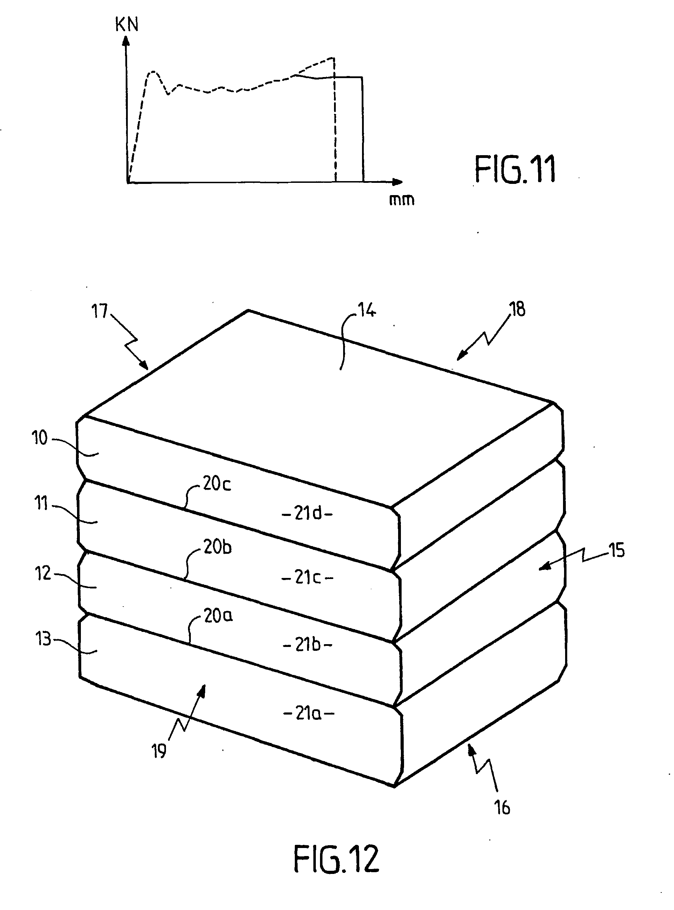

Enfin selon une quatrième variante de réalisation représentée Figure 8, la platine 4 présente une épaisseur réduite à l'intérieur de la ligne de rupture 7 en regard avec le bord d'extrémité intérieur du boîtier 2. Dans cet exemple, l'effort exercé sur le boîtier absorbeur d'énergie 2 chute ou stagne comme le montre le graphe de la Figure 11 par la ruine locale progressive de la partie 8 d'épaisseur réduite de la platine 5.

De cette façon, le volume résiduel du boîtier absorbeur d'énergie 2 correspondant à la densification critique de la matière absorbante 2a remplissant le boîtier 2 se trouve évacué à l'intérieur de l'extrémité du longeron 3 lorsque l'effort exercé sur le boîtier 2 dépasse la valeur de seuil déterminée. Grâce à ce processus l'effort exercé sur le boîtier absorbeur d'énergie 2 chute au lieu de continuer sa progression ce qui permet au boîtier absorbeur d'énergie 2 de continuer d'absorber de l'énergie sous un effort acceptable. Ceci permet également, à caractéristiques de boîtiers absorbeurs d'énergie égales, de réduire le porte-à-faux ainsi que l'encombrement de l'ensemble du dispositif absorbeur d'énergie.

La matière absorbante peut être de la mousse d'aluminium ou de la mousse sous forme de polymère.

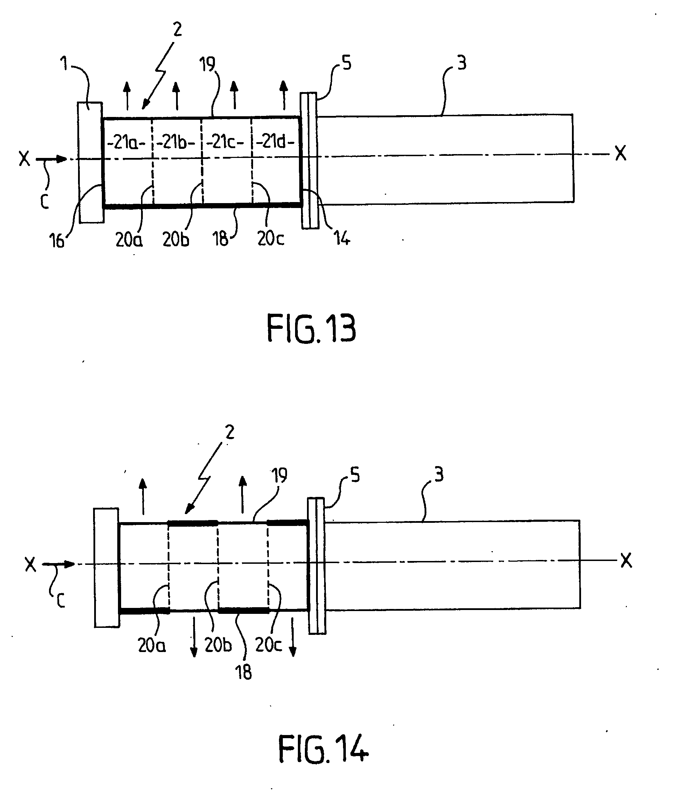

Selon un deuxième mode de réalisation représenté à la Figure 12, le boîtier absorbeur d'énergie 2 est conformé pour évacuer la matière absorbante 2a suivant une direction transversale à l'axe longitudinal XX du longeron comme montré par les Figures 13 et 14. Pour ce faire, le boîtier 2 comporte des ouvertures 10, 11, 12, 13 qui permettent à la matière absorbante d'être évacuée lorsque la pression exercée sur le dispositif absorbeur d'énergie par le longeron 3 et la poutre pare-chocs 1 dépasse une valeur de seuil déterminée.

De manière similaire aux modes de réalisation décrits précédemment, le boîtier absorbeur d'énergie 2 est en forme de parallélépipède rectangle composé de quatre parois latérales 14, 15, 16, 17 comprises entre deux parois de fond 18, 19. Il diffère cependant des modes de réalisation précédents du fait qu'une paroi latérale 14 du boîtier est fixée sur l'extrémité 5 du longeron 3 et que la paroi latérale opposée 16 est fixée à la poutre pare-chocs 1 de sorte que la pression appliquée sur le boîtier 2 par la poutre pare-chocs 1 et le longeron 3 s'exerce entre ces deux parois latérales 14, 16 et non pas entre deux parois de fond. Les parois de fond 18, 19 sont orientées suivant une direction perpendiculaire à l'axe longitudinal du boîtier 2.

L'intérieur du boîtier 2 est compartimenté par un nombre déterminé de cloisons 20a, 20b et 20c disposées parallèlement entre deux parois latérales opposées 14, 19. Les cloisons 20a, 20b et 20c et les parois latérales 14, 16 délimitent des alvéoles 21a, 21b, 21c et 21d fermés à une extrémité par une paroi de fond 18. Les alvéoles 21a, 21b, 21c et 21d sont remplis par de la mousse absorbante. L'autre extrémité 19 de chaque alvéole, opposée à celle fermée par une paroi de fond, est ouverte dans la paroi de fond opposée pour permettre à la matière enfermée dans chaque alvéole 21a, 21b, 21c et 21d d'être évacuée latéralement, relativement à l'axe longitudinal du longeron 3, lorsque la pression exercée sur le dispositif absorbeur d'énergie par le longeron 3 et la poutre pare-chocs 1 dépasse une valeur de seuil déterminée.

Les alvéoles 21a, 21b, 21c et 21d permettent de répartir la matière absorbante en plusieurs couches juxtaposées ce qui permet à cette matière d'être évacuée plus facilement. Les alvéoles 21a, 21b, 21c et 21d peuvent être ouverts sur une même paroi de fond 19 du boîtier ou alternativement ouverts sur deux parois de fond 18, 19 opposées ce qui permet, lors d'un choc frontal (flèche C), une évacuation d'un même côté du boîtier 3 ou sur deux côtés opposés dans le sens des flèches sur les Figures 13 et 14 qui peuvent aussi bien être dirigées verticalement qu'horizontalement.

Le boîtier absorbeur d'énergie 2 peut être réalisé par extrusion dans un profilé en forme de parallélépipède rectangle compartimenté par des cloisons disposées parallèlement entre deux parois parallèles opposées du profilé. Il peut être réalisé par exemple en aluminium, aussi bien par extrusion, que par emboutissage ou que par moulage.

Comme dans les exemples précédents, la matière absorbante peut être de la mousse d'aluminium ou de la mousse polymérisée.

La matière absorbante peut venir directement en contact avec le profilé du boîtier ou un jeu exister entre cette matière et ce profilé.

## Revendications

1. Dispositif absorbeur d'énergie pour poutre pare-chocs (1) de véhicule automobile, du type comprenant un boîtier absorbeur d'énergie (2) **caractérisé en ce que** le boîtier absorbeur d'énergie (2) qui est apte à se déformer pour absorber de l'énergie produite lors du choc, est rempli d'une matière absorbante d'énergie (2a), le boîtier absorbeur d'énergie (2) étant aménagé pour permettre l'évacuation de la matière absorbante d'énergie (2a) à l'extérieur du boîtier absorbeur d'énergie (2), dans au moins une direction d'évacuation donnée, lorsqu'une pression exercée sur le dispositif absorbeur d'énergie par le longeron (3) et la poutre pare-chocs (1) dépasse une valeur de seuil déterminée.

2. Dispositif selon la revendication 1, **caractérisé en ce que** la valeur de seuil correspond à un effort de flambement du longeron (3).

3. Dispositif selon l'une des revendications 1 et 2, **caractérisé en ce que** ledit boîtier présente en outre une platine (4) propre à être fixée à l'extrémité (5) d'un longeron (3) de véhicule et **en ce que** la platine (4) du boîtier absorbeur d'énergie (2) est aménagée pour permettre à la matière absorbante d'énergie (2a) de traverser ladite platine (4) et d'être évacuée à l'intérieur de l'extrémité (5) du longeron (3), qui est réalisée creuse.

4. Dispositif selon l'une des revendications 1 à 3, **caractérisé en ce que** la platine (4) du boîtier absorbeur d'énergie (2) a des formes et des dimensions déterminées pour permettre audit boîtier absorbeur d'énergie (2) d'être maintenu à l'extrémité (5) du longeron (3) tant que la pression exercée sur le dispositif absorbeur d'énergie par le longeron (3) et la poutre pare-chocs (1) est inférieure à la valeur de seuil déterminée et permettre à la matière absorbante d'énergie (2a) de pénétrer à l'intérieur du longeron (3) lorsque la pression exercée sur le dispositif absorbeur d'énergie par le longeron (3) et la poutre pare-chocs (1) dépasse la valeur de seuil déterminée.

5. Dispositif selon la revendication 4, **caractérisé en ce que** la platine (4) du boîtier absorbeur d'énergie (2) est traversée par un trou (6) de section déterminée pour permettre à la matière absorbante d'énergie ((2a) remplissant le boîtier absorbeur d'énergie (2) de pénétrer dans le longeron (3) lorsque la pression exercée sur le dispositif absorbeur d'énergie par le longeron (3) et la poutre pare--chocs (1) dépasse la valeur de seuil déterminée.

6. Dispositif selon la revendication 4, **caractérisé en ce que** la platine (4) ferme une extrémité du boîtier absorbeur d'énergie (2) et présente une ligne de rupture (7) programmée en regard avec le pourtour intérieur de la section transversale du boîtier absorbeur d'énergie (2) pour permettre à la matière absorbante d'énergie (2a) de pénétrer dans le longeron (3) en arrachant la portion de platine délimitée par la ligne de rupture (7) en regard avec le pourtour du longeron du boîtier absorbeur d'énergie (2), lorsque la pression exercée sur le dispositif absorbeur d'énergie par le longeron (3) et la poutre pare-chocs (1) dépasse la valeur de seuil déterminée.

7. Dispositif selon la revendication 4, **caractérisé en ce que** la ligne de rupture (7) est ajourée par tronçons.

8. Dispositif selon la revendication 4, **caractérisé en ce que** la platine (4) présente une épaisseur réduite par tronçons le long de la ligne de rupture (7).

9. Dispositif selon la revendication 4, **caractérisé en ce que** la platine (4) présente une épaisseur réduite tout le long de la ligne de rupture (7).

10. Dispositif selon la revendication 4, **caractérisé en ce que** la platine (4) présente une épaisseur réduite à l'intérieure de la ligne de rupture (7).

11. Dispositif selon l'une des revendications 1 et 2, **caractérisé en ce que** le boîtier absorbeur d'énergie (2) comporte des ouvertures (10, 11, 12, 13) pour permettre à la matière absorbante d'énergie (2a) d'être évacuée dans une direction transversale à la direction de l'axe longitudinal du longeron (3) lorsque la pression exercée sur le dispositif absorbeur d'énergie par le longeron (3) et la poutre pare-chocs (1) dépasse une valeur de seuil déterminée.

12. Dispositif selon la revendication 11, **caractérisé en ce que** le boîtier absorbeur d'énergie (2) a la forme générale d'un parallélépipède composé de quatre parois latérales (14, 15, 16, 17) comprises entre deux parois de fond (18, 19) disposées suivant une direction perpendiculaire à l'axe longitudinal du boîtier (2), et **en ce que** le boîtier (2) comporte un nombre déterminé de cloisons (20a, 20b, 20c) disposées parallèlement entre deux parois latérales opposées (14, 16) parallèles à l'axe longitudinal du longeron (3), pour former des alvéoles (21a, 21b, 21c, 21d) remplies par de la matière absorbante d'énergie (2a), délimités entre les cloisons (20a, 20b, 20c, 20d) et les parois latérales ( 14, 15, 16, 17), les alvéoles (21a, 21b, 21c, 21d) étant fermés à une extrémité par une paroi de fond (18, 19) et ouverts à l'autre extrémité dans la paroi de fond opposée (18, 19), pour permettre à la matière absorbante d'énergie (2a) enfermée dans chaque alvéole (21a, 21b, 21c, 21d) d'être évacuée transversalement, relativement à l'axe longitudinal du longeron, lorsque la pression exercée sur le dispositif absorbeur d'énergie par le longeron (3) et la poutre pare-chocs (1) dépasse une valeur de seuil déterminée.

13. Dispositif selon la revendication 12, **caractérisé en ce que** les alvéoles (21a, 21b, 21c, 21d) sont ouverts sur une même paroi de fond (18, 19) du boîtier absorbeur d'énergie (2).

14. Dispositif selon la revendication 13, **caractérisé en ce que** les alvéoles (21a, 21b, 21c, 21d) sont alternativement ouverts sur deux parois de fond opposées (18, 19) du boîtier absorbeur d'énergie (2).

15. Dispositif selon l'une des revendications 11 à 14, **caractérisé en ce que** le boîtier absorbeur d'énergie (2) est réalisé par extrusion dans un profilé en forme de parallélépipède, compartimenté par des cloisons (20a, 20b, 20c) disposées parallèlement entre deux parois parallèles opposées (14, 16) du profilé.

16. Dispositif selon l'une des revendications 1 à 15, **caractérisé en ce que** le boîtier absorbeur d'énergie (2) renferme une mousse absorbante en aluminium.

17. Dispositif selon l'une des revendications 1 à 15, **caractérisé en ce que** le boîtier absorbeur d'énergie (2) renferme une mousse absorbante en matière plastique.

18. Face avant comportant un dispositif selon l'une des revendications précédentes.

## Claims

1. Energy-absorbing device for a motor vehicle bumper beam (1), of the type comprising an energy-absorbing unit (2) which is capable of deforming in order to absorb the energy produced in an impact, **characterized in that** the energy-absorbing unit (2) is filled with an energy-absorbing material (2a), the energy-absorbing unit (2) being configured to allow the energy absorbing material (2a) to be discharged out of the energy-absorbing unit (2) in at least one given direction of discharge, when a pressure applied to the energy-absorbing device by the chassis frame side rail (3) and the bumper beam (1) exceeds a set threshold value.

2. Device according to Claim 1, **characterized in that** the threshold value corresponds to a load that will cause the chassis frame side rail (3) to buckle.

3. Device according to one of Claims 1 and 2, **characterized in that** said unit further has a mounting plate (4) able to be fixed to the end (5) of a vehicle chassis frame side rail (3), and **in that** the mounting plate (4) of the energy-absorbing unit (2) is configured to allow the energy-absorbing material (2a) to pass through said mounting plate (4) and be discharged into the end (5) of the chassis frame side rail (3), which is made hollow.

4. Device according to one of Claims 1 to 3, **characterized in that** the mounting plate (4) of the energy absorbing unit (2) has set shapes and dimensions so as to allow said energy-absorbing unit (2) to be held at the end (5) of the chassis frame side rail (3) as long as the pressure applied to the energy-absorbing device by the chassis frame side rail (3) and the bumper beam (1) is below the set threshold value and allow the energy-absorbing material (2a) to enter the chassis frame side rail (3) when the pressure applied to the energy-absorbing device by the chassis frame side rail (3) and the bumper beam (1) exceeds the set threshold value.

5. Device according to Claim 4, **characterized in that** the mounting plate (4) of the energy-absorbing unit (2) has passing through it a hole (6) of set cross section so as to allow the energy-absorbing material (2a) with which the energy-absorbing unit (2) is filled to enter the chassis frame side rail (3) when the pressure applied to the energy-absorbing device by the chassis frame side rail (3) and the bumper beam (1) exceeds the set threshold value.

6. Device according to Claim 4, **characterized in that** the mounting plate (4) closes one end of the energy-absorbing unit (2) and has a preset break line (7) facing the interior periphery of the cross section of the energy-absorbing unit (2) so as to allow the energy-absorbing material (2a) to enter the chassis frame side rail (3) by the learning away of the mounting plate portion delineated by the break line facing the periphery of the chassis frame side rail of the energy-absorbing unit (2) when the pressure applied to the energy-absorbing device by the chassis frame side rail (3) and the bumper beam (1) exceeds the set threshold value.

7. Device according to Claim 4, **characterized in that** the break line (7) comprises localized perforations.

8. Device according to Claim 4, **characterized in that** the mounting plate (4) has localized reductions in thickness along the break line (7).

9. Device according to Claim 4, **characterized in that** the mounting plate (4) has a reduction in thickness along the entire length of the break line (7).

10. Device according to Claim 4, **characterized in that** the mounting plate (4) has a reduced thickness inside the break line (7).

11. Device according to one of Claims 1 and 2, **characterized in that** the energy-absorbing unit (2) has openings (10, 11, 12, 13) to allow the energy-absorbing material (2a) to be discharged in a direction transverse to the direction of the longitudinal axis of the chassis frame side rail (3) when the pressure applied to the energy-absorbing device by the chassis frame side rail (3) and the bumper beam (1) exceeds a set threshold value.

12. Device according to Claim 11, **characterized in that** the energy-absorbing unit (2) is in the overall shape of a parallelepided made up of four lateral walls (14, 15, 16, 17) contained between two end walls (18, 19) arranged in a direction perpendicular to the longitudinal axis of the unit (2), and **in that** the unit (2) comprises a set number of partition walls (20a, 20b, 20c) arranged parallel between two opposing lateral walls (14, 16) that are parallel to the longitudinal axis of the chassis frame side rail (3) to form cells (21a, 21b, 21c, 21d) filled with energy-absorbing material (2a) and delimited between the partition walls (20a, 20b, 20c, 20d) and the lateral walls (14, 15, 16, 17), the cells (21a, 21b, 21c, 21d) being closed at one end by an end wall (18, 19) and open at the other end in the opposite end wall (18, 19) so as to allow the energy-absorbing material (2a) enclosed within each cell (21a, 21b, 21c, 21d) to be discharged transversally, relative to the longitudinal axis of the chassis frame side rail, when the pressure applied Lo the energy-absorbing device by the chassis frame side rail (3) and the bumper beam (1) exceeds a set threshold value.

13. Device according to Claim 12, **characterized in that** the cells (21a, 21b, 21c, 21d) are open onto one and the same end wall (18, 19) of the energy-absorbing unit (2).

14. Device according to Claim 13, **characterized in that** the cells (21a, 21b, 21c, 21d) are open alternately onto two opposing end walls (18, 19) of the energy-absorbing unit (2).

15. Device according to one of Claims 11 to 14, **characterized in that** the energy-absorbing unit (2) is produced by extrusion as a profile section one parallelepipedal shape, compartmentalized by partition walls (20a, 20b, 20c) arranged parallel between two opposing parallel walls (14, 16) of the profile section.

16. Device according Lo one of Claims 1 to 15, **characterized in that** the energy-absorbing unit (2) contains an absorbent aluminium foam.

17. Device according to one of Claims 1 to 15, **characterized in that** the energy-absorbing unit (2) contains an absorbent plastic foam.

18. Front end comprising a device according to one of the preceding claims.

## Patentansprüche

1. Energieabsorptionsvorrichtung für eine Stoßstange (1) eines Kraftfahrzeugs, von der Art, die ein Energieabsorptionsgehäuse (2) enthält, das sich verformen kann, um beim Stoß erzeugte Energie zu absorbieren, **dadurch gekennzeichnet, dass** das Energieabsorptionsgehäuse (2) mit einem Energie absorbierenden Stoff (2a) gefüllt ist, wobei das Energieabsorptionsgehäuse (2) eingerichtet ist, um die Abfuhr des Energie absorbierenden Stoffs (2a) nach außerhalb des Energieabsorptionsgehäuses (2) in mindestens einer gegebenen Abfuhrrichtung zu erlauben, wenn ein vom Längsträger (3) und der Stoßstange (1) auf die Energieabsorptionsvorrichtung ausgeübter Druck einen bestimmten Schwellwert überschreitet.

2. Vorrichtung nach Anspruch 1, dadurch gekenntzeichnet, dass der Schwellwert einer Knickkraft des Längsträgers (3) entspricht.

3. Vorrichtung nach einem der Ansprüche 1 und 2, **dadurch gekennzeichnet, dass** das Gehäuse außerdem eine Platine (4) aufweist, die am Ende (5) eines Längsträgers (3) eines Fahrzeugs befestigt werden kann, und dass die Platine (4) des Energieabsorptionsgehäuses (2) eingerichtet ist, um es dem Energie absorbierenden Stoff (2a) zu erlauben, die Platine (4) zu durchqueren und ins Innere des Endes (5) des Längsträgers (3) abgeführt zu werden, das hohl ausgeführt ist.

4. Vorrichtung nach einem der Ansprüche 1 bis 3, **dadurch gekennzeichnet, dass** die Platine (1) des Energieabsorptionsgehäuses (2) bestimmte Formen und Abmessungen hat, um es dem Energieabsorptionsgehäuse (2) zu ermöglichen, am Ende (5) des Längsträgers (3) gehalten zu werden, so lange der vom Längsträger (3) und der Stoßstange (1) auf die Energieabsorptionsvorrichtung ausgeübte Druck geringer als der bestimmte Schwellwert ist, und es dem Energie absorbierenden Stoff (2a) zu ermöglichen, ins Innere des Längsträgers (3) einzubringen, wenn der vom Längsträger (3) und der Stoßstange (1) auf die Energieabsorptionsvorrichtung ausgeübte Druck den bestimmten Schwellwert überschreitet.

5. Vorrichtung nach Anspruch 4, **dadurch gekennzeichnet, dass** die Platine (4) des Energieabsorptinnsgehäuses (2) von einem Loch (6) mit bestimmten Querschnitt durchquert wird, um es dem das Energieabsorptionsgehäuse (2) füllenden Energie absorbierenden Stoff (2a) zu ermöglichen, in den Längsträger (3) einzudringen, wenn der vom Längsträger (3) und der Stoßstange (1) auf die Energieabsorptionsvorrichtung ausgeübte Druck den bestimmten Schwellwert überschreitet.

6. Vorrichtung nach Anspruch 4, **dadurch gekennzeichnet, dass** die Platine (4) ein Ende des Energieabsorptionsgehäuses (2) schließt und eine programmierte Bruchlinie (7) gegenüber dem inneren Umriss des Querschnitts des Energieabsorptionsgehäuses (2) hat, um es dem Energie absorbierenden Stoff (2a) zu ermöglichen, in den Längsträger (3) einzudringen, indem der Platinenteil abgerissen wird, der von der Bruchlinie (7) gegenüber dem Umriss des Längsträgers des Energieabsorptionsgehäuses (2) begrenzt wird, wenn der vom Längsträger (3) und der Stoßtange (1) auf die Energieabsorptionsvorrichtung ausgeübte Druck den bestimmten Schwellwert überschreitet.

7. Vorrichtung nach Anspruch 4, **dadurch gekennzeichnet, dass** die Bruchlinie (7) abschnittsweise gelocht ist.

8. Vorrichtung nach Anspruch 4, **dadurch gekennzeichnet, dass** die Platine (4) eine abschnittsweise verringerte Dicke entlang der Bruchlinie (7) aufweist.

9. Vorrichtung nach Anspruch 4, **dadurch gekennzeichnet, dass** die Platine (4) entlang der ganzen Bruchlinie (7) eine verringerte Dicke aufweist.

10. Vorrichtung nach Anspruch 4, **dadurch gekennzeichnet, dass** die Platine (4) im Inneren der Bruchlinie (7) eine verringerte Dicke aufweist.

11. Vorrichtung nach einem der Ansprüche 1 und 2, **dadurch gekennzeichnet, dass** das Energieabsorptionsgehäuse (2) Öffnungen (10, 11, 12, 13) aufweist, um es dem Energie absorbierenden Stoff (2a) zu ermöglichen, in einer Querrichtung zur Richtung der Längsachse des Längsträgers (3) abgeführt zu werden, wenn der vom Längsträger (3) und der Stoßstange (1) auf die Encrgicabsorptionsvorrichtung ausgeübte Druck einen bestimmten Schwellwert überschreitet.

12. Vorrichtung nach Anspruch 11, **dadurch gekennzeichnet, dass** das Energieabsorptionsgehäuse (2) die allgemeine Form eines Parallelepipeds hat, das aus vier Seitenwänden (14, 15, 16, 17) zusammengesetzt ist, die zwischen zwei Bodenwänden (18, 19) liegen, die gemäß einer Richtung lotrecht zur Längsachse des Gehäuses (2) angeordnet sind, und dass das Gehäuse (2) eine bestimmte Anzahl von Trennwänden (20a, 20b, 20c) aufweist, die parallel zwischen zwei gegenüberliegenden Seitenwänden (14, 16) parallel zur Längsachse des Längsträgers (3) angeordnet sind, um Waben (21a, 21b, 21c, 21d) zu bilden, die mit Energie absorbierendem Stoff (2a) gefüllt sind, begrenzt zwischen den Trennwänden (20a, 20b, 20c, 20d) und den Seitenwänden (14, 15, 16, 17), wobei die Waben (21a, 21b, 21c, 21d) an einem Ende von einer Bodenwand (18, 19) verschlossen werden und am anderen Ende (18, 19) in der gegenüberliegenden Bodenwand offen sind, um es dem in jeder Wabe (21a, 21b, 21c, 21d) eingeschlossenen Energie absorbierenden Stoff (2a) zu erlauben, quer bezüglich der Längsachse des Längsträgers abgeführt zu werden, wenn der vom Längsträger (3) und der Stoßstange (1) auf die Energieabsorptionsvorrichtung ausgeübte Druck den bestimmten Schwellwert überschreitet.

13. Vorrichtung nach Anspruch 12, **dadurch gekennzeichnet, dass** die Waben (21a, 21b, 21c, 21d) sich auf die gleiche Bodenwand (18, 19) des Energieabsorptionsgehäuses (2) öffnen.

14. Vorrichtung nach Anspruch 13, **dadurch gekennzeichnet, dass** die Waben (21a, 21b, 21c, 21d) abwechselnd auf zwei gegenüberliegenden Bodenwänden (18, 19) des Energieabsorptionsgchäuses (2) offen sind.

15. Vorrichtung nach einem der Ansprüche 11 bis 14, **dadurch gekennzeichnet, dass** das Energieabsorptionsgehäuse (2) durch Extrudieren in einem Profilteil in Form eines Parallelepipeds hergestellt wird, das durch Trennwände (20a, 20b, 20c) unterteilt wird, die parallel zwischen zwei gegenüberliegenden parallelen Wänden (14, 16) des Profilteils angeordnet sind.

16. Vorrichtung nach einem der Ansprüche 1 bis 15, **dadurch gekennzeichnet, dass** das Energieabsorptionsgehäuse (2) einen absorbierenden Schaum aus Aluminium einschließt.

17. Vorrichtung nach einem der Ansprüche 1 bis 15, **dadurch gekennzeichnet, dass** das Energieabsorptionsgehäuse (2) einen absorbierenden Schaum aus Kunststoff einschließt.

18. Frontteil, das eine Vorrichtung nach einem der vorhergehenden Ansprüche aufweist.
